# EUROPEAN PATENT SPECIFICATION

(11) **EP 3 048 742 B1**
(45) Date of publication and mention of the grant of the patent: **11.10.2017**
(21) Application number: 15305076.0
(22) Date of filing: 23.01.2015
(51) Int. Cl.: H04B 3/32

(54) **Method and vectoring controller for controlling joint signal processing**
Verfahren und Vektorisierungssteuerung zum Steuern gemeinsamer Signalverarbeitung
Procédé et contrôleur de vectorisation permettant de contrôler le traitement de signal joint

(43) Date of publication of application: 27.07.2016
(73) Proprietor: ALCATEL LUCENT, 92100 Boulogne-Billancourt (FR)
(72) Inventor: Timmers, Michael, 2018 Antwerp (BE); Maes, Jochen, 2018 Antwerpen (BE); Nuzman, Carl Jeremy, Murray Hill, NJ 07974-0636 (US)
(74) Representative: ALU Antw Patent Attorneys

(56) References cited:
- ITU-T: "DRAFT RECOMMENDATION ITU-TG.993.5 SELF-FEXT CANCELLATION (VECTORING) FOR USE WITH VDSL2 TRANSCEIVERS", RECOMMENDATION ITU-T,, vol. G993.5, 22 April 2010 (2010-04-22), pages 1-80, XP008153737,
- Christopher Leung ET AL: "Vectored DSL: Potential, Implementation Issues and Challenges", IEEE Communications Surveys and Tutorials, 1 October 2013 (2013-10-01), page 1907, XP055181002, New York DOI: 10.1109/SURV.2013.011413.00098 Retrieved from the Internet: URL:http://search.proquest.com/docview/145 9136141 [retrieved on 2015-04-02]
- ITSIK BERGEL ET AL: "Convergence Analysis of Downstream VDSL Adaptive Multichannel Partial FEXT Cancellation", IEEE TRANSACTIONS ON COMMUNICATIONS, IEEE SERVICE CENTER, PISCATAWAY, NJ. USA, vol. 58, no. 10, 1 October 2010 (2010-10-01), pages 3021-3027, XP011317469, ISSN: 0090-6778, DOI: 10.1109/TCOMM.2010.082010.090140

## Description

### Field of the Invention

The field of the invention relates to joint signal processing. Particular embodiments relate to a method and a vectoring controller for controlling joint signal processing, a vectoring processor for joint signal processing, an access node, a communication system, and a computer program product for controlling joint signal processing.

### Background

Communication systems liable to interference, especially crosstalk interference, utilize precoding to compensate the effect of the interference, and gain scaling to compensate the effect of the precoding. Typically, the interference changes over time due to disturbance events (*e.g.,* a modem activation, deactivation or reactivation), such that new precoding schemes and, consequently, new gain scaling schemes must be set. The setting of these new schemes can be initiated from the transmitter-side (Transmitter-Initiated Gain Adaptation, TIGA). In particular, transmitters in DSL systems initiate such signal adaptation. To ensure effectiveness of the communication system, it is desired that such signal adaptation takes place in a coordinated way.

Known systems coordinate signal adaptation by agreeing on a synchronized point in time on which to set signal adaptation to use the new schemes. However, given the very high-speed operation of communication systems, switching to such new schemes requires that the new schemes are electronically stored very quickly from one symbol of the signal to the next. This in turn requires very high-cost hardware, since the write-speed of the electronic memory must be very high.

ITU-T, "Draft recommendation ITU-T G.993.5: Self-FEXT cancellation (vectoring) for use with VSDL2 transceivers" of 2010-04-22, discloses a single method of self-FEXT cancellation, in which FEXT generated by a group of near-end transceivers and interfering with the far-end transceivers of that same group is cancelled, between VDSL2 transceivers not necessarily of the same profile.

Christopher Leung et al., "Vectored DSL: Potential, Implementation Issues and Challenges', IEEE Communications Surveys and Tutorials, vol. 15, no. 4, 2013-10-01, page 1907 *et seqq.,* discloses specific techniques suitable for Vectored DSL, their performance, complexity and practical implementation, including Tomlinson-Harashima Pre-coding, Diagonalizing Pre-coding, Zero-Forcing Cancellation, and Decision-Feedback Cancellation, and in particular partial crosstalk cancellation by only removing the crosstalk between specific users on specific frequency tones. Itsik Bergel et al., "Convergence Analysis of Downstream VDSL Adaptive Multichannel Partial FEXT Cancellation", IEEE Transactions on Communications, vol. 58, no. 10, 2010-10-01, page 3021 *et seqq.,* discloses an adaptive downstream multichannel VDSL pre-coder based on error signal feedback, for the case of partial FEXT cancellation in order to achieve pre-coder convergence in reasonable time.

### Summary

It is an object of embodiments of the present invention to reduce write speed requirements for coordinated signal adaptation. Other objects of embodiments of the present invention are to reduce the cost of hardware provisioning and to adhere to regulations.

According to an aspect of the invention, there is provided a method for controlling joint signal processing of signals to be transmitted respectively from a number of transmitters to a number of receivers via a group of vectoring lines subject to pre-determined transmitted signal power requirements. Said method comprises: obtaining estimated expected crosstalk over said group of vectoring lines; determining an initial precoding matrix P0 configured for adapting said signals in order to pre-compensate said estimated expected crosstalk; obtaining re-estimated expected crosstalk over said group of vectoring lines after a disturbance event; determining a new precoding matrix P1 configured for pre-compensating said re-estimated expected crosstalk; determining at least one intermediate precoding matrix P' configured for gradually replacing P0 with P1, each intermediate precoding matrix P' based on at least a part of P0 and at least a part of P1; and determining at least one gain scaling matrix S configured for gain scaling said signals, based on said at least one precoding matrix P', in compliance with said pre-determined transmitted signal power requirements.

Said pre-determined transmitted signal power requirements may constitute frequency-dependent limitations on signal power to reduce interference across neighbouring frequencies, such as a transmit power spectral density (TxPSD) mask.

Embodiments of the present invention are based *inter alia* on the inventive insight that determining one or more intermediate precoding matrices P' configured to replace the initial precoding matrix P' allows for gradual replacement up to the new precoding matrix P1 after a disturbance event, which may reduce the need for very high write-speed hardware, and consequently allow for cheaper hardware provisioning, while taking into account that the gain scaling, for each separate symbol of the signal to be transmitted or over a number of symbols, should still comply with the pre-determined transmitted signal power requirements.
Specifically, by determining one or more intermediate precoding matrices P' that contain respective parts of P0 and P1, it is possible to strive to multiple objects of embodiments of the invention concurrently. Moreover, the time after the disturbance event can thus be used more efficiently.

In an embodiment, said at least one intermediate precoding matrix P' is determined by: swapping one or more elements of P0 for one or more corresponding elements of P1; swapping one or more sub-matrices of P0 for one or more corresponding sub-matrices of P1; swapping one or more columns of P0 for one or more corresponding columns of P1; or swapping one or more rows of P0 for one or more corresponding rows of P1.

In this manner, the replacement can be performed in an efficient manner, since swapping of the listed parts can be performed efficiently in existing hardware.

In an embodiment, said at least one intermediate precoding matrix P' is determined by iteratively selecting one or more parts of P0 to be replaced with one or more corresponding parts of P1 along a linear matrix dimension (*e.g*. from left to right, from right to left, from top to bottom or from bottom to top).

In this manner, a limited amount of resources is required for the selection process.

In another embodiment, said at least one intermediate precoding matrix P' is determined by selecting for each element of P' the maximum of the corresponding elements of P0 and P1.

In this manner, a conservative intermediate precoding matrix P' can be determined, such that associated gain scaling matrices S may be determined with greater liberty.

In yet another embodiment: said at least one intermediate precoding matrix P' is determined by selecting a migration path from P0 to P1; for each intermediate precoding matrix P' of said migration path, an associated gain scaling matrix S' is computed; and said at least one gain scaling matrix S is determined by selecting a valid, preferably the maximal, associated gain scaling matrix S' from amongst said associated gain scaling matrices S'.

In this manner, the one or more gain scaling matrices S can be determined efficiently yet effectively.

In a further developed embodiment, selecting a migration path is performed using a search algorithm or heuristic, in order to optimize a pre-determined condition.
The skilled person will understand that example pre-determined conditions may comprise such conditions as: achieving a highest possible data rate during transmission, achieving least complexity for writing / reading (in a particular example, by addressing columns of the corresponding matrix as sequentially as possible), optimizing transmission for prioritized user classes or users (e.g. by giving priority to business users over residential users), or any combination thereof, etc. Moreover, the skilled person will appreciate that the notion 'to optimize' is to be seen from a computer science / artificial intelligence point of view, i.e. striving for an optimal or sub-optimal solution to a condition. Example search algorithms or heuristics for such optimization may comprise simulated annealing, reinforcement learning, and gradient-based optimization.

In yet another embodiment: a plurality of potential migration paths from P0 to P1 are determined, each potential migration path containing at least one potential intermediate precoding matrix P'; for each potential migration path of said plurality of potential migration paths, for each potential intermediate precoding matrix P' of said potential migration path, a potential associated gain scaling matrix S' is computed; for each potential migration path of said plurality of potential migration paths, a valid, preferably the maximal, potential associated gain scaling matrix S' for that potential migration path is selected; said at least one gain scaling matrix S is determined by selecting a valid, preferably the maximal, associated gain scaling matrix S' from amongst said valid or maximal potential associated gain scaling matrices S'; and said at least one intermediate precoding matrix P' is determined by selecting the migration path from amongst said potential migration paths that corresponds to said selected valid or maximal associated gain scaling matrix S'.

In this manner, the one or more gain scaling matrices S can be determined efficiently yet very effectively.

In a further developed embodiment, said or each migration path comprises at least a phase containing one or more intermediate precoding matrices P' whose at least one associated gain scaling matrix S is equal to an initial gain scaling matrix S0 associated with said initial precoding matrix P0.

In this manner, the phase can be used efficiently to commence gradual replacement of the initial precoding matrix P0 without endangering the compatibility of the gain scaling matrix S in view of the pre-determined transmitted signal power requirements.

In an embodiment, the method comprises: determining a synchronized point in time on which to begin using said new precoding matrix P1 in order to pre-compensate said re-estimated expected crosstalk; transmitting a transmitter-initiated command to begin using said new precoding matrix P1 at said synchronized point in time; in a period of time before said synchronized point in time, gradually replacing said initial precoding matrix P0 with said at least one intermediate precoding matrix P'; and after said synchronized point in time, using said new precoding matrix P1.

In this manner, signal adaptation can be coordinated while allowing the use of less costly hardware.

In another embodiment, the method comprises determining at least one bit loading table b, based on said at least one intermediate precoding matrix P', in order to match an observed signal-to-noise ratio.

In this manner, it is possible to adaptively assign a different number of bits to each line according to changing channel conditions due to a disturbance event.

In an embodiment, signal transmission via said communication channel adheres to a communication technique, such as G.Fast, characterized by potentially suffering from relative crosstalk interference levels greater than -6 dB.

According to another aspect of the invention, there is provided a vectoring controller for controlling joint signal processing of signals to be transmitted respectively from a number of transmitters to a number of receivers via a group of vectoring lines subject to pre-determined transmitted signal power requirements. Said vectoring controller comprises a management entity interface and a processor. The management entity interface is configured for: obtaining estimated expected crosstalk over said group of vectoring lines; and obtaining re-estimated expected crosstalk over said group of vectoring lines after a disturbance event. The processor is configured for: determining an initial precoding matrix P0 configured for adapting said signals in order to pre-compensate said estimated expected crosstalk; determining a new precoding matrix P1 configured for pre-compensating said re-estimated expected crosstalk; determining at least one intermediate precoding matrix P' configured for gradually replacing P0 with P1, each intermediate precoding matrix P' based on at least a part of P0 and at least a part of P1; and determining at least one gain scaling matrix S configured for gain scaling said signals, based on said at least one precoding matrix P', in compliance with said pre-determined transmitted signal power requirements.

The skilled person will understand that the hereinabove described considerations and advantages also apply for embodiments of the vectoring controller, *mutatis mutandis.*

In an embodiment, said processor is configured for performing all of the steps of any one of the method embodiments described hereinabove.

According to another aspect of the invention, there is provided a vectoring processor for joint signal processing of signals to be transmitted respectively from a number of transmitters to a number of receivers via a group of vectoring lines subject to pre-determined transmitted signal power requirements. Said vectoring processor comprises a precoder memory and a precoder processor, and a gain scaler memory and a gain scaler processor. The precoder memory is configured for: storing an initial precoding matrix P0 configured for adapting said signals in order to pre-compensate estimated expected crosstalk over said group of vectoring lines; gradually replacing said initial precoding matrix P0 with at least one intermediate precoding matrix P', each intermediate precoding matrix P' based on at least a part of P0 and at least a part of a new precoding matrix P1, said new precoding matrix P1 being configured for pre-compensating re-estimated expected crosstalk over said group of vectoring lines after a disturbance event; and replacing said at least one intermediate precoding matrix P' with said new precoding matrix P1. The precoder processor is configured for: adapting said signals using said initial precoding matrix P0 stored in said precoder memory; adapting said signals using said at least one intermediate precoding matrix P' stored in said precoder memory; and adapting said signals using said new precoding matrix P1 stored in said precoder memory. The gain scaler memory is configured for storing at least one gain scaling matrix S configured for gain scaling said signals, based on said at least one precoding matrix P', in compliance with said pre-determined transmitted signal power requirements. The gain scaler processor is configured for gain scaling said signals using said at least one gain scaling matrix S stored in said gain scaler memory.

The skilled person will understand that the hereinabove described considerations and advantages also apply for embodiments of the vectoring processor, *mutatis mutandis.*

According to another aspect of the invention, there is provided an access node comprising: a vectoring controller described hereinabove; a vectoring processor described hereinabove, said vectoring processor being coupled to said vectoring controller and to a group of vectoring lines connecting a number of transmitters and a respective number of receivers; and a management entity. The management entity is configured for: providing to said vectoring controller estimated expected crosstalk over said group of vectoring lines; detecting a disturbance event on said group of vectoring lines; and providing to said vectoring controller re-estimated expected crosstalk over said group of vectoring lines after detecting said disturbance event.

The skilled person will understand that the hereinabove described considerations and advantages also apply for embodiments of the access node, *mutatis mutandis.*

In an embodiment, the access node comprises a timing controller configured for: determining a synchronized point in time on which to begin using said new precoding matrix P1 in order to pre-compensate said re-estimated expected crosstalk; transmitting a transmitter-initiated command to begin using said new precoding matrix P1 at said synchronized point in time; in a period of time before said synchronized point in time, causing said vectoring processor to gradually replace said initial precoding matrix P0 with said at least one intermediate precoding matrix P'; and after said synchronized point in time, causing said vectoring processor to use said new precoding matrix P1.

According to another aspect of the invention, there is provided a communication system comprising a number of access nodes described hereinabove, each access node connected to a number of CPEs, customer premises equipment, via a group of vectoring lines.

The skilled person will understand that the hereinabove described considerations and advantages also apply for embodiments of the communication system, *mutatis mutandis.*

According to another aspect of the invention, there is provided a computer program product comprising computer-executable instructions for performing a method when the program is run on a computer, the method comprising the steps of any one of the methods described hereinabove.

The skilled person will understand that the hereinabove described considerations and advantages also apply for embodiments of the computer program product, *mutatis mutandis.*

### Brief Description of the Figures

The accompanying drawings are used to illustrate presently preferred non-limiting exemplary embodiments according to the present invention. The above and other advantages of the features of embodiments according to the invention and objects of the invention will become more apparent and the invention will be better understood from the following detailed description when read in conjunction with the accompanying drawings, in which:
Figure 1 illustrates schematically an embodiment of a system according to the present invention;
Figures 2A and 2B illustrate schematically operation of an embodiment of a method according to the present invention;
Figure 3 illustrates schematically operation of an embodiment of an access node according to the present invention; and
Figure 4 illustrates schematically another embodiment of a system according to the present invention.

### Description of Embodiments

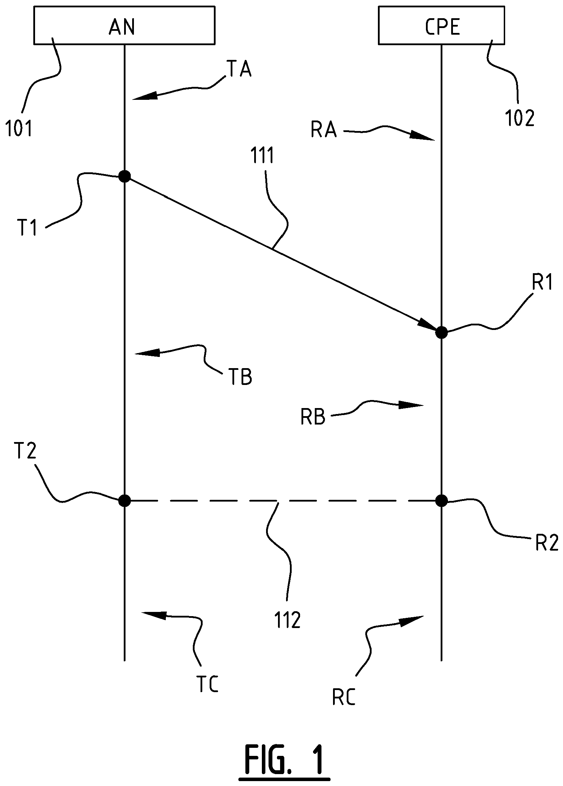

Figure 1 illustrates schematically an embodiment of a system according to the present invention. The system comprises an access node 101 (AN, such as a FTU-O, G.Fast Transmission Unit - Central Office side) and a customer premises equipment 102 (CPE, such as a FTU-R, G.Fast Transmission Unit - Remote Terminal side) that are remote from each other and that are connected via a communication channel comprising at least a group of vectoring lines (not shown explicitly), *i.e.,* lines for which a vectoring mechanism to cancel crosstalk interference is active. The group of vectoring lines is subject to pre-determined transmitted signal power requirements. These requirements constitute frequency-dependent limitations on signal power to reduce interference across neighbouring frequencies, and may take the form of a power spectral density (PSD) mask as imposed by a regulator of a technological specification.

The AN 101 operates during period of time TA, which is a period of time before point in time T1, using the following settings: an initial precoding matrix P0, and an initial gain scaling matrix S0. The initial precoding matrix P0 serves to compensate the crosstalk over said group of vectoring lines, and has been determined based on estimated expected crosstalk over said group of vectoring lines, obtained for example from a management entity coupled to a detector on the CPE 102 side. The initial gain scaling matrix S0 serves to compensate the impact of the initial precoding matrix P0, since signal transmission over the communication channel should comply with (*i.e*., adhere to) the pre-determined transmitted signal power requirements.
Moreover, in some embodiments, the CPE 102 may also determine an initial bit loading table b0, which serves to allocate a number of bits to respective carriers of the communication channel, and communicate this initial bit loading table b0 back to the AN 101.

The CPE 102 operates during period of time RA, which is a period of time before point in time R1, using the inverse of the initial gain scaling matrix S0 in order to equalize the receive carriers, and if applicable the initial bit loading table b0.

For the purposes of this example, we assume that the initial gain scaling matrix S0 and if applicable the initial bit loading table b0 have previously been communicated and agreed upon by the AN 101 and the CPE 102, either amongst themselves or under the management of a separate entity.

Before point in time T1, the AN 101 obtains estimated expected crosstalk over said group of vectoring lines, for example in the form of a crosstalk channel matrix, for example, via a management entity coupled to a channel crosstalk detector on the CPE 102 side, and finds that due to some reason the estimated expected crosstalk has changed, requiring that the signal adaptation should be changed in order to compensate the changed estimated expected crosstalk so as to correctly compensate crosstalk over said group of vectoring lines. Possible reasons may include disturbance events, such as a joining event and/or a leaving event, wherein respectively a DSL line is activated and/or a DSL line is deactivated. The effects of such events can be detected when a neighbouring line joins or leaves, which impacts the noise floor.

In response to finding that the signal adaptation should be changed, the AN 101 (or more specifically, a vector controller (not shown) of the AN 101) determines a new precoding matrix P1 for compensating the changed crosstalk channel matrix. The new precoding matrix P1 serves to replace the initial precoding matrix P0 that was in use during (at least) period of time TA. The AN 101 (or more specifically, the vector controller) also determines a new associated gain scaling matrix S1 based on the new precoding matrix P1, in order to retain compliance with said pre-determined transmitted signal power requirements, to replace S0, and optionally a new bit loading table b1 based on the initial bit loading table b0.
AN 101 (or more specifically, a timing controller (not shown) of the AN 101) also determines a synchronized point in time T2/R2, on which itself and the CPE 102 agree to adapt signal transmission in a synchronized manner 112. The skilled person is aware of techniques for ensuring the synchronicity between AN 101 and CPE 102.

At point in time T1 AN 101 transmits a transmitter-initiated command 111, sometimes named a TIGA or Transmitter-Initiated Gain Adaptation command, to CPE 102. The command 111 comprises information representing the new gain scaling matrix S0 and if applicable the new bit loading table b1. There is no need to include the new precoding matrix P1 in the command 111, since it is only applied at the AN 101 and not at the CPE 102.

In the present figure, it has been chosen to represent the transmission of the command 111 as a single arrow, but it will be understood that the principles of good engineering may require acknowledgements and the like, which are not dealt with in detail in this specification.

At point in time R1 CPE 102 receives the transmitter-initiated command 111. The CPE 102 consequently decides to change, at point in time R2, its signal adaptation to using the new settings, comprising the new gain scaling matrix S1 for updated frequency equalization and if applicable the new bit loading table b0.

During TB (after and/or before point in time R1), and optionally even during TA before point in time T1, the AN 101 may determine at least one intermediate precoding matrix P' configured for gradually replacing P0 with P1, each intermediate precoding matrix P' based on at least a part of P0 and at least a part of P1, in order to replace the initial precoding matrix P0, preferably gradually. Also, it will be appreciated that having a single intermediate precoding matrix P' to go from P0 to P1 may also be termed 'gradually'. Moreover, meanwhile, the AN 101 may determine at least one gain scaling matrix S configured for gain scaling said signals (since signal adaptation with the precoding matrix typically exceeds the pre-determined transmitted signal power requirements to which the group of vectoring lines is subject). The at least one gain scaling matrix S may be determined in such a way, that it complies with the pre-determined transmitted signal power requirements, either singularly or as an aggregate.

In particular embodiments, the selection of the part of P0 and the part of P1 may be done by swapping select parts of P0 with corresponding parts of P1. In some embodiments, the parts may be chosen as one or more elements, one or more sub-matrices, and/or one or more columns and/or rows. In preferred embodiments, swapping columns is chosen, since this most closely follows the structure of typical precoding and gain scaling matrices that represent lines in DSL binders.

At point in time T2/R2 both the AN 101 and the CPE 102 coordinate the change in their signal adaptation in a synchronized manner 112. This means that the AN 101 writes the new precoding matrix P1 to its memory storage for signal adaptation, as well as the new gain scaling matrix S1 and if applicable the new bit loading table b1. Likewise, the CPE 102 writes the new gain scaling matrix S1 (or a frequency equalization scheme derived from that matrix) and if applicable the new bit loading table b1 to its memory storage for signal adaptation.

During period of time TC for the AN 101 and period of time RC for the CPE 102, the AN 101 and the CPE 102 make use of compatible signal adaptation settings, such that signal transmission can take place in an effective manner.

In some embodiments, a conservative gain scaling matrix S may be chosen. This matrix is conservative, in that it is chosen to satisfy the pre-determined transmitted signal power requirements for multiple corresponding precoding matrices P (intermediate P' and/or initial P0 and/or new PI). Specifically, by determining a gain scaling matrix S based on (at least one intermediate precoding matrix P' itself based on) the element-wise maximum of the initial precoding matrix P0 and the new precoding matrix P1, that gain scaling matrix S will be compatible in view of the pre-determined transmitted signal power requirements with any matrix that is a combination of the initial precoding matrix P0 and the new precoding matrix P1.

In certain embodiments, the at least one intermediate precoding matrix P' may simply be chosen along a linear matrix dimension. For example, a first intermediate precoding matrix P'1 may be determined by combining the leftmost column of the initial precoding matrix P0 and all other columns of the new precoding matrix P1. A second intermediate precoding matrix P'2 may then be determined by combining the two leftmost columns of the initial precoding matrix P0 and all other columns of the new precoding matrix P1, and so on.

In other embodiments, the at least one gain scaling matrix S can be chosen by selecting a migration path from the initial precoding matrix P0 to the new precoding matrix P1 (wherein the migration path represents a possible sequence of intermediate precoding matrices P' allowing to gradually replace P0 with PI), and by computing for each intermediate precoding matrix P' on that migration path its associated gain scaling matrix S', and by choosing from those the gain scaling matrix S that has, for example, a sufficiently high or the highest column sum over all of the associated gain scaling matrices S' for the migration path (*i.e*., a valid or respectively the maximal associated gain scaling matrix S').
Alternatively, the at least one gain scaling matrix S can be chosen by determining some or all possible migration paths, with each migration path for example determined as described hereinabove, and then by selecting the optimal migration path, *i.e.,* the migration path that has the highest potential associated gain scaling matrix S'.

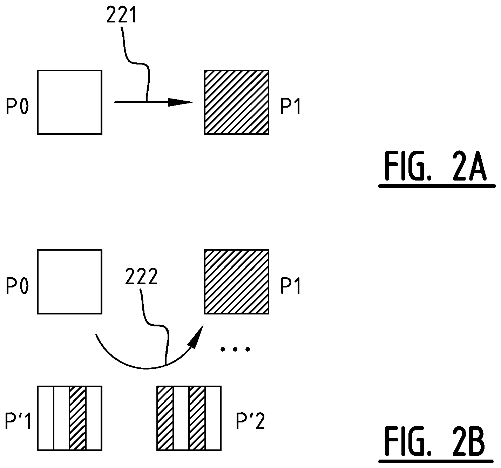

Figures 2A and 2B illustrate schematically the operation of an embodiment of a method according to the present invention.

Arrow 221 represents a direct replacement of an initial precoding matrix P0 with a new precoding matrix P1 in a precoder memory storage of a AN's vectoring processor 310 (where precoding takes place). Writing the new precoding matrix P1 to memory in a single step (so as to ensure that precoding is done with an effective precoding matrix) requires a very high write-speed memory, which is expensive, since the precoding matrix contains a row and column for every line in the binder, and since the precoding matrix may also be three-dimensional to include a frequency dimension for the frequencies on which the communication channel including the group of vectoring lines operates.

By contrast, arrow 222 represents a gradual replacement of an initial precoding matrix P0 with a new precoding matrix P1 in the precoder memory storage of the AN's vectoring processor 310. Along the arrow 222 are shown two intermediate precoding matrices P'1 and P'2, and an ellipsis sign indicating that there may be zero or more additional intermediate precoding matrices P' in certain embodiments. In other embodiments, there may be as few as only one intermediate precoding matrix P'.
Each intermediate precoding matrix P' is shown to be based on both the initial precoding matrix P0 and the new precoding matrix P1, for example by including at least a part of P0 and at least a part of P1 - if appropriate, one or more of the parts may be further processed before or after inclusion in P'. This is illustrated visually by including striped columns in the intermediate precoding matrices P'1 and P'2 that represent corresponding columns of the new precoding matrix P1. In other embodiments, the intermediate precoding matrices P' may comprise other corresponding elements than columns from the initial precoding matrix P0 and the new precoding matrix P1, such as select elements, rows or sub-matrices. It will be understood that by determining these intermediate precoding matrices P'1 and P'2 based on P0 and P1 in such a manner, it is possible to gradually replace the initial precoding matrix P0 with the new precoding matrix P1 and thus to save on the write-speed requirements for the memory storage that is configured to store the relevant matrices for signal adaptation, and ultimately to use less expensive hardware. Moreover, by determining one or more associated gain scaling matrices S for said at least one intermediate precoding matrix P' in compliance with pre-determined transmitted signal power requirements, it can be prevented that those power requirements would be exceeded by precoding using said at least one intermediate precoding matrix P'. The one or more associated gain scaling matrices S may be determined so as to comply with the pre-determined power requirements for each separate intermediate precoding matrix P', or over an aggregated number of intermediate precoding matrices P'.

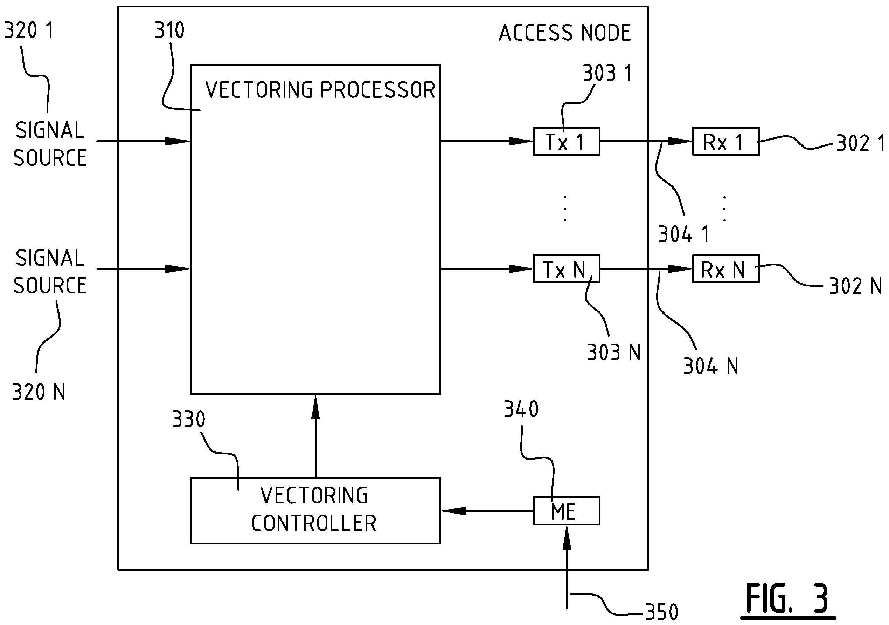

Figure 3 illustrates schematically an embodiment of an access node 301 according to the present invention. The access node 301 comprises a number of transmitters 303 1-N, each coupled via a subscriber line 304 1-N to a respective receiver 302 1-N (outside of and typically remote from the access node 301). In this example, the subscriber lines 304 1-N form a group of vectoring lines 304 1-N. The group of vectoring lines is subject to pre-determined transmitted signal power requirements, such as a transmit power spectral density (TxPSD) mask, for example imposed by a regulator. The access node 301 also comprises a vectoring processor 310 configured for joint signal processing of signals to be transmitted from the transmitters 303 1-N to the receivers 302 1-N. The signals are provided respectively from a number of signal sources 320 1-N. The access node 301 further also comprises a vectoring controller 330 configured for controlling the joint processing. The access node 301 also comprises a management entity 340.

The vectoring controller 330 is coupled to the vectoring processor 310, such that the vectoring controller 330 may control the joint processing taking place at the vectoring processor 310. In this manner, it is also coupled (indirectly) to the group of vectoring lines 304 1-N. The management entity 340 is connected to, for example, a crosstalk measurement or estimation module, that is configured to provide 350 to the management entity 340 measured and/or estimated crosstalk coefficients representing crosstalk interference over the group of vectoring lines 304 1-N.

The vectoring controller 330 is configured to obtain from the management entity 340 estimated expected crosstalk over the group of vectoring lines 304 1-N, *i.e.,* the crosstalk interference that is expected to occur for signals that are to be transmitted over the group of vectoring lines. In order to pre-compensate the estimated expected crosstalk, the vectoring controller 330 is configured to determine an initial precoding matrix P0 allowing to adapt (*i.e*., precode) the signals to be transmitted.

The vectoring controller 330 is further configured to, after a disturbance event, wherein a subscriber joins or leaves, or the like, obtain from the management entity 340 re-estimated expected crosstalk over said group of vectoring lines. Such disturbance events typically change the crosstalk interference over the group of vectoring lines, and may therefore require a change in the signal adaptation. In order to pre-compensate the re-estimated expected crosstalk, the vectoring controller 330 is configured to determine a new precoding matrix P1, allowing to replace P0. This replacement may be done at a synchronized point in time, as described hereinabove.

In order to provide a more gradual replacement, the vectoring controller 330 is configured to determine at least one intermediate precoding matrix P' configured for gradually replacing P0 with P1. An example of gradual replacing has been described hereinabove with reference to figure 2. Each such intermediate precoding matrix P' may be based on at least a part of P0 (*e.g.,* may use a number of columns of P0, without or with some additional processing), and at least a part of P1 (*e.g.,* may use a number of columns of P1, without or with some additional processing).

In order to comply with pre-determined transmitted signal power requirements to which the group of vectoring lines may be subject, the vectoring controller 330 may also be configured to determine at least one gain scaling matrix S configured for gain scaling the signals to be transmitted. The at least one gain scaling matrix S may be based on the at least one precoding matrix P', since precoding may add power to signals (especially in higher frequencies) that can be compensated by gain scaling and frequency equalization. The at least one gain scaling matrix S may be determined in compliance with the pre-determined transmitted signal power requirements for each gain scaling matrix S separately, or aggregately over a number of gain scaling matrices S.
The at least one gain scaling matrix S may also be based on the initial precoding matrix P0 and/or the new precoding matrix P1.

In this manner, the vectoring controller 330 is capable of controlling joint signal processing (to be performed at the vectoring processor 310) in such a way that the memory write-speed can be kept low, saving on hardware costs, and that the pre-determined transmitted signal power requirements can be complied with.

The vectoring processor 310 is meant for joint signal processing of the signals to be transmitted. To that end, it comprises a precoder memory and precoder processor, and a gain scaler memory and gain scaler processor (not shown separately).

The precoding memory is configured for storing and for replacing (or allowing replacement) of the precoding matrices determined by the vectoring controller 330. By allowing gradual replacement of the precoding matrices stored in the precoding memory, the precoder processor can use the respective precoding matrices to adapt the signals to be transmitted without needing to provide a very high write-speed memory.

The gain scaler memory is configured for storing at least one gain scaling matrix S configured for gain scaling said signals, as determined by the vectoring controller 330. The gain scaler processor is configured for actually gain scaling said signals using said at least one gain scaling matrix S. By using that at least one gain scaling matrix S, it is possible to comply with the pre-determined transmitted signal power requirements.

In some embodiments, the access node 301 also may comprise a timing controller (not shown in Figure 3) configured for determining a synchronized point in time on which to begin using said new precoding matrix P1 in order to pre-compensate said re-estimated expected crosstalk. The timing controller is further configured for transmitting or causing the transmission of a transmitter-initiated command to begin using said new precoding matrix P1 at said synchronized point in time, and for, in a period of time before said synchronized point in time, causing said vectoring processor 330 to gradually replace said initial precoding matrix P0 with said at least one intermediate precoding matrix P'. Also, the timing controller is configured for, after said synchronized point in time, causing said vectoring processor 330 to use said new precoding matrix P1.

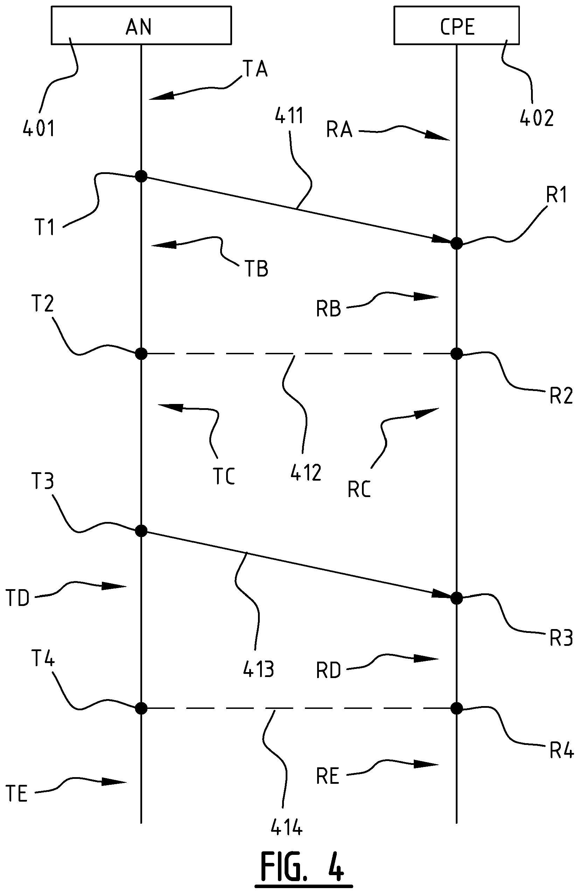

Figure 4 illustrates schematically another embodiment of a system according to the present invention. The system embodiment corresponds to the system embodiment shown in Figure 1, with the following differences.
The AN 401 determines sometime during period of time TA that the signal adaptation settings that it uses (as in the system embodiment shown in Figure 1) need to be changed due to some disturbance event, such as a joining event or a leaving event, for example detected by a management entity 340. It transmits a preliminary transmitter-initiated command 411 to the CPE 402 comprising a partial update using intermediate precoding matrices P' of a first phase whose associated gain scaling matrices S are equal to the initial gain scaling matrix S0 (which is already known and in use at the CPE 402). During the period of time TB, and even before point in time R1, the AN 401 may therefore update its signal adaptation settings independently. Additionally or alternatively, the partial update may comprise a part of the new signal adaptation settings (*i.e*., the new precoding matrix P1 and/or a new gain scaling matrix S1 and/or a new bit loading table b1).

At point in time T2/R2 the AN 401 and the CPE 402 change to the preliminary newly determined signal adaptation settings in a coordinated manner 412. In particular, on that point in time, they agree to update their memory storage to the (preliminary) new signal adaptation settings. In some embodiments, it may happen that by point in time T2/R2 the relevant matrix or matrices has or have already been replaced entirely by the gradual replacement described above, in which case no specific action is necessary anymore at point in time T2/R2.

At point in time T3, the AN 401 may transmit an updated transmitter-initiated command 413 to the CPE 402, which receives the command 413 at point in time R3. The updated command 413 may represent a second phase of intermediate precoding matrices P' for which it is not necessarily so that their associated gain scaling matrices are equal to the initial gain scaling matrix S0. Additionally or alternatively, the updated command 413 may simply comprise a bigger part of the new signal adaptation settings.

During period of time TD (before and/or after point in time R3), and optionally even during period of time TC before point in time T3, the AN 401 may gradually replace the precoding matrix P in use by the vectoring processor 310, while still satisfying the pre-determined transmitted signal power requirements by appropriately determining the at least one gain scaling matrix S based on the precoding matrices P in compliance with those requirements.

At point in time T4/R4, the AN 401 and the CPE 401 change to the updated newly determined signal adaptation settings in a coordinated manner 414. In particular, on that point in time, they agree to update their respective memory storages to the (updated) new signal adaptation settings. In some embodiments, it may happen that by point in time T4/R4 the relevant matrix or matrices has or have already been replaced entirely by the gradual replacement described above, in which case no specific action is necessary anymore at point in time T4/R4.

During period of time TE, the AN 401 uses the updated new signal adaptation settings. During period of time RE, the CPE 402 uses its updated new signal adaptation settings. Since these signal adaptation settings have been determined in a compatible manner, signal transmission between the AN 401 and the CPE 402 can take place in an effective manner. In particular, the pre-determined transmitted signal power requirements are satisfied.

The advantage to using a preliminary command 411 and an updated command 413, is that the CPE 402 can follow updates at the AN 401 more quickly, and more effectively (since it is made aware of more detailed differences). Moreover, the AN 401 can already commence gradual replacement of its signal adaptation settings in parallel with transmitting the updated command 413, so as to reduce the total time that is needed for completing the entire change.

A person of skill in the art would readily recognize that steps of various above-described methods can be performed by programmed computers. Herein, some embodiments are also intended to cover program storage devices, *e.g*. digital data storage media, which are machine or computer readable and encode machine-executable or computer-executable programs of instructions, wherein said instructions perform some or all of the steps of said above-described methods. The program storage devices may be, *e.g.* digital memories, magnetic storage media such as magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks labelled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer.

Whilst the principles of the invention have been set out above in connection with specific embodiments, it is to be understood that this description is merely made by way of example and not as a limitation of the scope of protection which is determined by the appended claims.

## Claims

1. A method for controlling joint signal processing of signals to be transmitted respectively from a number of transmitters (303) to a number of receivers (302) via a group of vectoring lines (304) subject to pre-determined transmitted signal power requirements; said method comprising:
- obtaining estimated expected crosstalk over said group of vectoring lines (304);
- determining an initial precoding matrix P0 configured for adapting said signals in order to pre-compensate said estimated expected crosstalk;
- obtaining re-estimated expected crosstalk over said group of vectoring lines (304) after a disturbance event;
- determining a new precoding matrix P1 configured for pre-compensating said re-estimated expected crosstalk; and **characterized by:**
- determining at least one intermediate precoding matrix P' configured for gradually - i.e. in multiple steps - replacing (222) P0 with P1, each intermediate precoding matrix P' based on at least a part of P0 and at least a part of P1; and
- determining at least one gain scaling matrix S configured for gain scaling said signals, based on said at least one precoding matrix P', in compliance with said pre-determined transmitted signal power requirements.

2. The method of claim 1, wherein said at least one intermediate precoding matrix P' is determined by:
- swapping one or more elements of P0 for one or more corresponding elements of P1; or
- swapping one or more sub-matrices of P0 for one or more corresponding sub-matrices of P1; or
- swapping one or more columns of P0 for one or more corresponding columns of P1; or
- swapping one or more rows of P0 for one or more corresponding rows of P1.

3. The method of any one of the claims 1-2, wherein said at least one intermediate precoding matrix P' is determined by iteratively selecting one or more parts of P0 to be replaced with one or more corresponding parts of P1 along a linear matrix dimension, wherein a linear matrix dimension is from left to right, from right to left, from top to bottom, or from bottom to top.

4. The method of any one of the claims 1-2, wherein said at least one intermediate precoding matrix P' is determined by selecting for each element of P' the maximum of the corresponding elements of P0 and P1.

5. The method of any one of the claims 1-2, wherein:
- said at least one intermediate precoding matrix P' is determined by selecting a migration path from P0 to P1, said migration path representing a possible sequence of intermediate precoding matrices P' allowing gradual replacement (222) of P0 with P1;
- for each intermediate precoding matrix P' of said migration path, an associated gain scaling matrix S' is computed; and
- said at least one gain scaling matrix S is determined by selecting a valid, preferably the maximal
- i.e. having a maximal column sum, associated gain scaling matrix S' from amongst said associated gain scaling matrices S'.

6. The method of any one of the claims 1-2, wherein:
- a plurality of potential migration paths from P0 to P1 are determined, each migration path representing a possible sequence of intermediate precoding matrices P' allowing gradual replacement (222) of P0 with P1, each potential migration path containing at least one potential intermediate precoding matrix P';
- for each potential migration path of said plurality of potential migration paths, for each potential intermediate precoding matrix P' of said potential migration path, a potential associated gain scaling matrix S' is computed;
- for each potential migration path of said plurality of potential migration paths, a valid, preferably the maximal - i.e. having a maximal column sum, potential associated gain scaling matrix S' for that potential migration path is selected;
- said at least one gain scaling matrix S is determined by selecting a valid, preferably the maximal
- i.e. having a maximal column sum, associated gain scaling matrix S' from amongst said valid or maximal potential associated gain scaling matrices S'; and
- said at least one intermediate precoding matrix P' is determined by selecting the migration path from amongst said potential migration paths that corresponds to said selected valid or maximal associated gain scaling matrix S'.

7. The method of any one of the claims 5 or 6, wherein said or each migration path comprises at least a phase containing one or more intermediate precoding matrices P' whose at least one associated gain scaling matrix S is equal to an initial gain scaling matrix S0 associated with said initial precoding matrix P0.

8. The method of any of the previous claims, comprising:
- determining a synchronized point in time (414) on which to begin using said new precoding matrix P1 in order to pre-compensate said re-estimated expected crosstalk;
- transmitting a transmitter-initiated command (411) to begin using said new precoding matrix P1 at said synchronized point in time (414);
- in a period of time before said synchronized point in time (414), gradually replacing (222) said initial precoding matrix P0 with said at least one intermediate precoding matrix P'; and
- after said synchronized point in time (414), using said new precoding matrix P1.

9. A vectoring controller (330) for controlling joint signal processing of signals to be transmitted respectively from a number of transmitters (303) to a number of receivers (302) via a group of vectoring lines (304) subject to pre-determined transmitted signal power requirements; said vectoring controller (330) comprising:
- a management entity interface (340) configured for:
- obtaining estimated expected crosstalk over said group of vectoring lines (304); and
- obtaining re-estimated expected crosstalk over said group of vectoring lines (304) after a disturbance event; and
**characterized by:**
- a processor (310) configured for:
- determining an initial precoding matrix P0 configured for adapting said signals in order to pre-compensate said estimated expected crosstalk;
- determining a new precoding matrix P1 configured for pre-compensating said re-estimated expected crosstalk;
- determining at least one intermediate precoding matrix P' configured for gradually - i.e. in multiple steps - replacing (222) P0 with P1, each intermediate precoding matrix P' based on at least a part of P0 and at least a part of P1; and
- determining at least one gain scaling matrix S configured for gain scaling said signals, based on said at least one precoding matrix P', in compliance with said pre-determined transmitted signal power requirements.

10. The vectoring controller (330) of claim 9, wherein said processor is configured for performing all of the steps of any one of the methods 2-7.

11. A vectoring processor (310) for joint signal processing of signals to be transmitted respectively from a number of transmitters (303) to a number of receivers (302) via a group of vectoring lines (304) subject to pre-determined transmitted signal power requirements; said vectoring processor (310) **characterized by** comprising:
- a precoder memory configured for:
- storing an initial precoding matrix P0 configured for adapting said signals in order to pre-compensate estimated expected crosstalk over said group of vectoring lines (304);
- gradually - i.e. in multiple steps - replacing (222) said initial precoding matrix P0 with at least one intermediate precoding matrix P', each intermediate precoding matrix P' based on at least a part of P0 and at least a part of a new precoding matrix P1, said new precoding matrix P1 being configured for pre-compensating re-estimated expected crosstalk over said group of vectoring lines (304) after a disturbance event; and
- replacing said at least one intermediate precoding matrix P' with said new precoding matrix P1;
- a precoder processor configured for:
- adapting said signals using said initial precoding matrix P0 stored in said precoder memory;
- adapting said signals using said at least one intermediate precoding matrix P' stored in said precoder memory; and
- adapting said signals using said new precoding matrix P1 stored in said precoder memory;
- a gain scaler memory configured for storing at least one gain scaling matrix S configured for gain scaling said signals, based on said at least one precoding matrix P', in compliance with said pre-determined transmitted signal power requirements; and
- a gain scaler processor configured for gain scaling said signals using said at least one gain scaling matrix S stored in said gain scaler memory.

12. An access node (301) **characterized by** comprising:
- a vectoring controller (330) according to any one of the claims 9-10;
- a vectoring processor (310) according to claim 11, said vectoring processor (310) being coupled to said vectoring controller (330) and to a group of vectoring lines (304) connecting a number of transmitters (303) and a respective number of receivers (302); and
- a management entity (340) configured for:
- providing to said vectoring controller (330) estimated expected crosstalk over said group of vectoring lines (304);
- detecting a disturbance event on said group of vectoring lines (304); and
- providing to said vectoring controller (330) re-estimated expected crosstalk over said group of vectoring lines (304) after detecting said disturbance event.

13. The access node (301) of claim 12, comprising a timing controller configured for:
- determining a synchronized point in time (414) on which to begin using said new precoding matrix P1 in order to pre-compensate said re-estimated expected crosstalk;
- transmitting a transmitter-initiated command (411) to begin using said new precoding matrix P1 at said synchronized point in time (414);
- in a period of time before said synchronized point in time (414), causing said vectoring processor (310) to gradually replace (222) said initial precoding matrix P0 with said at least one intermediate precoding matrix P'; and
- after said synchronized point in time (414), causing said vectoring processor (310) to use said new precoding matrix P1.

14. A communication system comprising a number of access nodes (301) according to claim 13, each access node (401) connected to a number of CPEs (402), customer premises equipment, via a group of vectoring lines (304).

15. A computer program product comprising computer-executable instructions for performing a method when the program is run on a computer, the method comprising the steps of any one of the methods of any one of the claims 1-8.

## Patentansprüche

1. Verfahren zum Steuern gemeinsamer Signalverarbeitung von Signalen, die jeweils von einer Anzahl von Sendern (303) an eine Anzahl von Empfängern (302) über eine Gruppe von Vectoring-Leitungen (304) zu übertragen sind, die vorausbestimmten übertragenen Signalleistungsanforderungen unterworfen sind; wobei das besagte Verfahren Folgendes umfasst:
- Erhalten eines geschätzten erwarteten Nebensprechens über die besagte Gruppe von Vectoring-Leitungen (304);
- Bestimmen einer ursprünglichen Vorcodierungsmatrix P0, die zum Anpassen der besagten Signale ausgelegt ist, um das besagte geschätzte erwartete Nebensprechen vorzukompensieren;
- Erhalten eines neu geschätzten erwarteten Nebensprechens über die besagte Gruppe von Vectoring-Leitungen (304) nach einem Störereignis;
- Bestimmen einer neuen Vorcodierungsmatrix P1, die zum Vorkompensieren des besagten neu geschätzten erwarteten Nebensprechens ausgelegt ist; und
**gekennzeichnet durch:**
- Bestimmen von mindestens einer Zwischen-Vorcodierungsmatrix P', die zum graduellen
- d.h. stufenweisen - Ersetzen (222) von P0 durch P1 ausgelegt ist, wobei jede Zwischen-Vorcodierungsmatrix P' auf mindestens einem Teil von P0 und mindestens einem Teil von P1 basiert; und
- Bestimmen von mindestens einer Verstärkungsskalierungsmatrix S, die zur Verstärkungsskalierung der besagten Signale ausgelegt ist, basierend auf der besagten mindestens einen Vorcodierungsmatrix P', in Übereinstimmung mit den besagten vorausbestimmten übertragenen Signalleistungsanforderungen.

2. Verfahren nach Anspruch 1, wobei die besagte mindestens eine Zwischen-Vorcodierungsmatrix P' bestimmt wird durch:
- Austauschen von einem oder mehreren Elementen von P0 durch eines oder mehrere entsprechende Elemente von P1; oder
- Austauschen von einer oder mehreren Untermatrizen von P0 durch eine oder mehrere entsprechende Untermatrizen von P1; oder
- Austauschen von einer oder mehreren Spalten von P0 durch eine oder mehrere entsprechende Spalten von P1; oder
- Austauschen von einer oder mehreren Zeilen von P0 durch eine oder mehrere entsprechende Zeilen von P1.

3. Verfahren nach einem beliebigen der Ansprüche 1-2, wobei die besagte mindestens eine Zwischen-Vorcodierungsmatrix P' bestimmt wird durch iteratives Auswählen von einem oder mehreren Teilen von P0, die zu ersetzen sind durch einen oder mehrere entsprechende Teile von P1 entlang einer linearen Matrixdimension, wobei eine lineare Matrixdimension von links nach rechts, von rechts nach links, von oben nach unten oder von unten nach oben verläuft.

4. Verfahren nach einem beliebigen der Ansprüche 1-2, wobei die besagte mindestens eine Zwischen-Vorcodierungsmatrix P' bestimmt wird durch Auswählen des Maximums der entsprechenden Elemente von P0 und P1 für jedes Element von P'.

5. Verfahren nach einem beliebigen der Ansprüche 1-2, wobei:
- die besagte mindestens eine Zwischen-Vorcodierungsmatrix P' bestimmt wird durch Auswählen eines Migrationspfads von P0 zu P1, wobei der besagte Migrationspfad eine mögliche Abfolge von Zwischen-Vorcodierungsmatrizen P' darstellt, um graduelles Ersetzen (222) von P0 durch P1 zu ermöglichen;
- für jede Zwischen-Vorcodierungsmatrix P' des besagten Migrationspfads eine zugehörige Verstärkungsskalierungsmatrix S' berechnet wird; und
- die besagte mindestens eine Verstärkungsskalierungsmatrix S bestimmt wird durch Auswählen einer gültigen, vorzugweise der maximalen - d.h. mit einer maximalen Spaltensumme - zugehörigen Verstärkungsskalierungsmatrix S' aus den besagten zugehörigen Verstärkungsskalierungsmatrizen S'.

6. Verfahren nach einem beliebigen der Ansprüche 1-2, wobei:
- eine Vielzahl von potenziellen Migrationspfaden von P0 zu P1 bestimmt wird, wobei jeder Migrationspfad eine mögliche Abfolge von Zwischen-Vorcodierungsmatrizen P' darstellt, um graduelles Ersetzen (222) von P0 durch P1 zu ermöglichen, wobei jeder potenzielle Migrationspfad mindestens eine potenzielle Zwischen-Vorcodierungsmatrix P' enthält;
- für jeden potenziellen Migrationspfad der besagten Vielzahl von potenziellen Migrationspfaden, für jede potenzielle Zwischen-Vorcodierungsmatrix P' des besagten potenziellen Migrationspfads eine potenzielle zugehörige Verstärkungsskalierungsmatrix S' berechnet wird;
- für jeden potenziellen Migrationspfad der besagten Vielzahl von potenziellen Migrationspfaden eine gültige, vorzugweise die maximale - d.h. mit einer maximalen Spaltensumme - potenzielle zugehörige Verstärkungsskalierungsmatrix S' für diesen potenziellen Migrationspfad ausgewählt wird;
- die besagte mindestens eine Verstärkungsskalierungsmatrix S bestimmt wird durch Auswählen einer gültigen, vorzugweise der maximalen - d.h. mit einer maximalen Spaltensumme - zugehörigen Verstärkungsskalierungsmatrix S' aus den besagten gültigen oder maximalen potenziellen zugehörigen Verstärkungsskalierungsmatrizen S'; und
- die besagte mindestens eine Zwischen-Vorcodierungsmatrix P' bestimmt wird durch Auswählen des Migrationspfads aus den besagten potenziellen Migrationspfaden, der der besagten ausgewählten gültigen oder maximalen zugehörigen Verstärkungsskalierungsmatrix S' entspricht.

7. Verfahren nach einem beliebigen der Ansprüche 5 oder 6, wobei der besagte oder jeder Migrationspfad mindestens eine Phase umfasst, die eine oder mehrere Zwischen-Vorcodierungsmatrizen P' enthält, deren mindestens eine zugehörige Verstärkungsskalierungsmatrix S gleich ist wie eine ursprüngliche Verstärkungsskalierungsmatrix SO, die der besagten ursprünglichen Vorcodierungsmatrix P0 zugeordnet ist.

8. Verfahren nach einem beliebigen der vorstehenden Ansprüche, umfassend:
- Bestimmen eines synchronisierten Zeitpunkts (414), ab dem die Verwendung der besagten neuen Vorcodierungsmatrix P1 beginnen soll, um das besagte neu geschätzte erwartete Nebensprechen vorzukompensieren;
- Übertragen eines Sender-initiierten Befehls (411), um die Verwendung der besagten neuen Vorcodierungsmatrix P1 zu dem besagten synchronisierten Zeitpunkt (414) zu beginnen;
- in einer Zeitdauer vor dem besagten synchronisierten Zeitpunkt (414), graduelles Ersetzen (222) der besagten ursprünglichen Vorcodierungsmatrix P0 durch die besagte mindestens eine Zwischen-Vorcodierungsmatrix P'; und
- nach dem besagten synchronisierten Zeitpunkt (414), Verwenden der besagten neuen Vorcodierungsmatrix P1.

9. Vectoring-Controller (330) zum Steuern gemeinsamer Signalverarbeitung von Signalen, die jeweils von einer Anzahl von Sendern (303) an eine Anzahl von Empfängern (302) über eine Gruppe von Vectoring-Leitungen (304) zu übertragen sind, die vorausbestimmten übertragenen Signalleistungsanforderungen unterworfen sind; wobei der besagte Vectoring-Controller (330) Folgendes umfasst:
- eine Verwaltungseinheit-Schnittstelle (340), die ausgelegt ist zum:
- Erhalten eines geschätzten erwarteten Nebensprechens über die besagte Gruppe von Vectoring-Leitungen (304); und
- Erhalten eines neu geschätzten erwarteten Nebensprechens über die besagte Gruppe von Vectoring-Leitungen (304) nach einem Störereignis; und
**gekennzeichnet durch:**
- einen Prozessor (310), der ausgelegt ist zum:
- Bestimmen einer ursprünglichen Vorcodierungsmatrix P0, die zum Anpassen der besagten Signale ausgelegt ist, um das besagte geschätzte erwartete Nebensprechen vorzukompensieren;
- Bestimmen einer neuen Vorcodierungsmatrix P1, die zum Vorkompensieren des besagten neu geschätzten erwarteten Nebensprechens ausgelegt ist;
- Bestimmen von mindestens einer Zwischen-Vorcodierungsmatrix P', die zum graduellen - d.h. stufenweisen - Ersetzen (222) von P0 durch P1 ausgelegt ist, wobei jede Zwischen-Vorcodierungsmatrix P' auf mindestens einem Teil von P0 und mindestens einem Teil von P1 basiert; und
- Bestimmen von mindestens einer Verstärkungsskalierungsmatrix S, die zur Verstärkungsskalierung der besagten Signale ausgelegt ist, basierend auf der besagten mindestens einen Vorcodierungsmatrix P', in Übereinstimmung mit den besagten vorausbestimmten übertragenen Signalleistungsanforderungen.

10. Vectoring-Controller (330) nach Anspruch 9, wobei der besagte Prozessor zum Durchführen der Schritte nach einem beliebigen der Verfahren 2-7 ausgelegt ist.

11. Vectoring-Prozessor (310) zur gemeinsamen Signalverarbeitung von Signalen, die jeweils von einer Anzahl von Sendern (303) an eine Anzahl von Empfängern (302) über eine Gruppe von Vectoring-Leitungen (304) zu übertragen sind, die vorausbestimmten übertragenen Signalleistungsanforderungen unterworfen sind; wobei der besagte Vectoring-Prozessor (310) **dadurch gekennzeichnet ist, dass** er Folgendes umfasst:
- einen Vorcodierungsspeicher, der ausgelegt ist zum:
- Speichern einer ursprünglichen Vorcodierungsmatrix P0, die zum Anpassen der besagten Signale ausgelegt ist, um ein geschätztes erwartetes Nebensprechen über die besagte Gruppe von Vectoring-Leitungen (304) vorzukompensieren;
- graduellen - d.h. stufenweisen - Ersetzen (222) der besagten ursprünglichen Vorcodierungsmatrix P0 durch mindestens eine Zwischen-Vorcodierungsmatrix P', wobei jede Zwischen-Vorcodierungsmatrix P' auf mindestens einem Teil von P0 und mindestens einem Teil einer neuen Vorcodierungsmatrix P1 basiert, wobei die besagte neue Vorcodierungsmatrix P1 ausgelegt ist zum Vorkompensieren eines neu geschätzten erwarteten Nebensprechens über die besagte Gruppe von Vectoring-Leitungen (304) nach einem Störereignis; und
- Ersetzen der besagten mindestens einen Zwischen-Vorcodierungsmatrix P' durch die besagte neue Vorcodierungsmatrix P1;
- einen Vorcodierungsprozessor, der ausgelegt ist zum:
- Anpassen der besagten Signale durch Verwenden der besagten ursprünglichen Vorcodierungsmatrix P0, die in dem besagten Vorcodierungsspeicher gespeichert ist;
- Anpassen der besagten Signale durch Verwenden der besagten mindestens einen Zwischen-Vorcodierungsmatrix P', die in dem besagten Vorcodierungsspeicher gespeichert ist; und
- Anpassen der besagten Signale durch Verwenden der besagten neuen Vorcodierungsmatrix P1, die in dem besagten Vorcodierungsspeicher gespeichert ist;
- einen Verstärkungsskalierungsspeicher, der ausgelegt ist zum Speichern von mindestens einer Verstärkungsskalierungsmatrix S, die zur Verstärkungsskalierung der besagten Signale ausgelegt ist, basierend auf der besagten mindestens einen Vorcodierungsmatrix P', in Übereinstimmung mit den besagten vorausbestimmten übertragenen Signalleistungsanforderungen; und
- einen Verstärkungsskalierungsprozessor, der zur Verstärkungsskalierung der besagten Signale durch Verwenden der besagten mindestens einen Verstärkungsskalierungsmatrix S, die in dem besagten Verstärkungsskalierungsspeicher gespeichert ist, ausgelegt ist.

12. Zugangsknoten (301), **dadurch gekennzeichnet, dass** er Folgendes umfasst:
- einen Vectoring-Controller (330) nach einem beliebigen der Ansprüche 9-10;
- einen Vectoring-Prozessor (310) nach Anspruch 11, wobei der besagte Vectoring-Prozessor (310) an den besagten Vectoring-Controller (330) und an eine Gruppe von Vectoring-Leitungen (304) gekoppelt ist, die eine Anzahl von Sendern (303) und eine jeweilige Anzahl von Empfängern (302) verbinden; und
- eine Verwaltungseinheit (340), die ausgelegt ist zum:
- Bereitstellen eines geschätzten erwarteten Nebensprechens über die besagte Gruppe von Vectoring-Leitungen (304) für den besagten Vectoring-Controller (330);
- Erkennen eines Störereignisses an der besagten Gruppe von Vectoring-Leitungen (304); und
- Bereitstellen eines neu geschätzten erwarteten Nebensprechens über die besagte Gruppe von Vectoring-Leitungen (304) für den besagten Vectoring-Controller (330) nach Erkennen des besagten Störereignisses.

13. Zugangsknoten (301) nach Anspruch 12, umfassend einen Timing-Controller, der ausgelegt ist zum:
- Bestimmen eines synchronisierten Zeitpunkts (414), ab dem die Verwendung der besagten neuen Vorcodierungsmatrix P1 beginnen soll, um das besagte neu geschätzte erwartete Nebensprechen vorzukompensieren;
- Übertragen eines Sender-initiierten Befehls (411), um die Verwendung der besagten neuen Vorcodierungsmatrix P1 zu dem besagten synchronisierten Zeitpunkt (414) zu beginnen;
- in einer Zeitdauer vor dem besagten synchronisierten Zeitpunkt (414), Veranlassen des besagten Vectoring-Prozessors (310) zum graduellen Ersetzen (222) der besagten ursprünglichen Vorcodierungsmatrix P0 durch die besagte mindestens eine Zwischen-Vorcodierungsmatrix P'; und
- nach dem besagten synchronisierten Zeitpunkt (414), Veranlassen des besagten Vectoring-Prozessors (310) zum Verwenden der besagten neuen Vorcodierungsmatrix P1.

14. Kommunikationssystem mit einer Anzahl von Zugangsknoten (301) nach Anspruch 13, wobei jeder Zugangsknoten (401) mit einer Anzahl von CPEs (402), Kundenendgeräten, über eine Gruppe von Vectoring-Leitungen (304) verbunden ist.

15. Computerprogrammprodukt mit computerausführbaren Anweisungen zum Durchführen eines Verfahrens, wenn das Programm auf einem Computer gestartet wird, wobei das Verfahren die Schritte eines beliebigen der Verfahren nach einem beliebigen der Ansprüche 1-8 umfasst.

## Revendications

1. Procédé de contrôle du traitement de signal joint de signaux devant être transmis respectivement à partir de plusieurs émetteurs (303) vers plusieurs récepteurs (302) par l'intermédiaire d'un groupe de lignes de vectorisation (304) soumises à des exigences de puissance du signal transmis prédéterminées ; ledit procédé comprenant les étapes suivantes :
- obtenir une diaphonie prévue estimée sur ledit groupe de lignes de vectorisation (304) ;
- déterminer une matrice de précodage initiale P0 configurée pour adapter lesdits signaux afin de précompenser ladite diaphonie prévue estimée ;
- obtenir une diaphonie prévue estimée à nouveau sur ledit groupe de lignes de vectorisation (304) après un événement de perturbation ;
- déterminer une nouvelle matrice de précodage P1 configurée pour précompenser ladite diaphonie prévue estimée à nouveau ; et **caractérisé par les étapes suivantes :**
- déterminer au moins une matrice de précodage intermédiaire P' configurée pour remplacer progressivement (222) (c'est-à-dire en de multiples étapes) P0 par P1, chaque matrice de précodage intermédiaire P' étant basée sur au moins une partie de P0 et au moins une partie de P1 ; et
- déterminer au moins une matrice d'étalonnage de gain S configurée pour étalonner le gain desdits signaux, sur la base de ladite au moins une matrice de précodage P', conformément auxdites exigences de puissance du signal transmis prédéterminées.

2. Procédé selon la revendication 1, dans lequel ladite au moins une matrice de précodage intermédiaire P' est déterminée par les étapes suivantes :
- échanger un ou plusieurs éléments de P0 avec un ou plusieurs éléments correspondants de P1 ; ou
- échanger une ou plusieurs sous-matrices de P0 avec une ou plusieurs sous-matrices correspondantes de P1 ; ou
- échanger une ou plusieurs colonnes de P0 avec une ou plusieurs colonnes correspondantes de P1 ; ou
- échanger une ou plusieurs rangées de P0 avec une ou plusieurs rangées correspondantes de P1.

3. Procédé selon l'une quelconque des revendications 1 ou 2, dans lequel ladite au moins une matrice de précodage intermédiaire P' est déterminée par la sélection itérative d'une ou de plusieurs parties de P0 devant être remplacées par une ou plusieurs parties correspondantes de P1 le long d'une dimension de matrice linéaire, dans lequel une dimension de matrice linéaire va de gauche à droite, de droite à gauche, de haut en bas ou de bas en haut.

4. Procédé selon l'une quelconque des revendications 1 ou 2, dans lequel ladite au moins une matrice de précodage intermédiaire P' est déterminée en sélectionnant pour chaque élément de P' le maximum d'éléments correspondants de P0 et P1.

5. Procédé selon l'une quelconque des revendications 1 ou 2, dans lequel :
- ladite au moins une matrice de précodage intermédiaire P' est déterminée en sélectionnant un chemin de migration entre P0 et P1, ledit chemin de migration représentant une séquence possible de matrices de précodage intermédiaires P' permettant le remplacement progressif (222) de P0 par P1 ;
- pour chaque matrice de précodage intermédiaire P' dudit chemin de migration, une matrice d'étalonnage de gain S' associée est calculée ; et
- ladite au moins une matrice d'étalonnage de gain S est déterminée en sélectionnant une matrice d'étalonnage de gain S' associée valide et de préférence maximum (c'est-à-dire ayant une somme des colonnes maximum) parmi lesdites matrices d'étalonnage de gain S' associées.

6. Procédé selon l'une quelconque des revendications 1 ou 2, dans lequel :
- une pluralité de chemins de migration potentiels entre P0 et P1 sont déterminés, chaque chemin de migration représentant une séquence possible de matrices de précodage intermédiaires P' permettant un remplacement progressif (222) de P0 par P1, chaque chemin de migration potentiel contenant au moins une matrice de précodage intermédiaire P' potentielle ;
- pour chaque chemin de migration potentiel de ladite pluralité de chemins de migration potentiels, pour chaque matrice de précodage intermédiaire P' potentielle dudit chemin de migration potentiel, une matrice d'étalonnage de gain S' associée potentielle est calculée ;
- pour chaque chemin de migration potentiel de ladite pluralité de chemins de migration potentiels, une matrice d'étalonnage de gain S' associée potentielle valide et de préférence maximum (c'est-à-dire ayant une somme des colonnes maximum) pour ce chemin de migration potentiel est sélectionnée ;
- ladite au moins une matrice d'étalonnage de gain S est déterminée en sélectionnant une matrice d'étalonnage de gain S' associée valide et de préférence maximum (c'est-à-dire ayant une somme des colonnes maximum) parmi lesdites matrices d'étalonnage de gain S' associées potentielles valides ou maximum ; et
- ladite au moins une matrice de précodage intermédiaire P' est déterminée en sélectionnant le chemin de migration parmi lesdits chemins de migration potentiels qui correspond à ladite matrice d'étalonnage de gain S' associée valide ou maximum sélectionnée.

7. Procédé selon l'une quelconque des revendications 5 ou 6, dans lequel ledit chemin de migration ou chaque chemin de migration comprend au moins une phase contenant une ou plusieurs matrices de précodage intermédiaires P' dont l'au moins une matrice d'étalonnage de gain S associée est égale à une matrice d'étalonnage de gain initiale S0 associée à ladite matrice de précodage initiale P0.

8. Procédé selon l'une quelconque des revendications précédentes, comprenant les étapes suivantes :
- déterminer un moment synchronisé dans le temps (414) à partir duquel commencer à utiliser ladite nouvelle matrice de précodage P1 afin de précompenser ladite diaphonie prévue estimée à nouveau ;
- transmettre une commande initiée par l'émetteur (411) pour commencer à utiliser ladite nouvelle matrice de précodage P1 audit moment synchronisé dans le temps (414) ;
- dans une période précédant ledit moment synchronisé dans le temps (414), remplacer progressivement (222) ladite matrice de précodage initiale P0 par ladite au moins une matrice de précodage intermédiaire P' ; et
- après ledit moment synchronisé dans le temps (414), utiliser ladite nouvelle matrice de précodage P1.

9. Contrôleur de vectorisation (330) pour contrôler le traitement de signal joint de signaux devant être transmis respectivement à partir de plusieurs émetteurs (303) vers plusieurs récepteurs (302) par l'intermédiaire d'un groupe de lignes de vectorisation (304) soumises à des exigences de puissance du signal transmis prédéterminées ; ledit contrôleur de vectorisation (330) comprenant :
- une interface d'entité de gestion (340) configurée pour :
- obtenir une diaphonie prévue estimée sur ledit groupe de lignes de vectorisation (304); et
- obtenir une diaphonie prévue estimée à nouveau sur ledit groupe de lignes de vectorisation (304) après un événement de perturbation ; et
**caractérisé par :**
- un processeur (310) configuré pour :
- déterminer une matrice de précodage initiale P0 configurée pour adapter lesdits signaux afin de précompenser ladite diaphonie prévue estimée ;
- déterminer une nouvelle matrice de précodage P1 configurée pour précompenser ladite diaphonie prévue estimée à nouveau ;
- déterminer au moins une matrice de précodage intermédiaire P' configurée pour remplacer progressivement (222) (c'est-à-dire en de multiples étapes) P0 par P1, chaque matrice de précodage intermédiaire P' étant basée sur au moins une partie de P0 et au moins une partie de P1 ; et
- déterminer au moins une matrice d'étalonnage de gain S configurée pour étalonner le gain desdits signaux, sur la base de ladite au moins une matrice de précodage P', conformément auxdites exigences de puissance du signal transmis prédéterminées.

10. Contrôleur de vectorisation (330) selon la revendication 9, dans lequel ledit processeur est configuré pour exécuter toutes les étapes de l'un quelconque des procédés 2 à 7.

11. Processeur de vectorisation (310) pour le traitement de signal joint de signaux devant être transmis respectivement à partir de plusieurs émetteurs (303) vers plusieurs récepteurs (302) par l'intermédiaire d'un groupe de lignes de vectorisation (304) soumises à des exigences de puissance du signal transmis prédéterminées ; ledit processeur de vectorisation (310) **étant caractérisé en ce qu'il** comprend :
- une mémoire de précodeur configurée pour :
- stocker une matrice de précodage initiale P0 configurée pour adapter lesdits signaux afin de précompenser une diaphonie prévue estimée sur ledit groupe de lignes de vectorisation (304) ;
- remplacer progressivement (222) (c'est-à-dire en de multiples étapes) ladite matrice de précodage initiale P0 par au moins une matrice de précodage intermédiaire P', chaque matrice de précodage intermédiaire P' étant basée sur au moins une partie de P0 et au moins une partie d'une nouvelle matrice de précodage P1, ladite nouvelle matrice de précodage P1 étant configurée pour précompenser une diaphonie prévue estimée à nouveau sur ledit groupe de lignes de vectorisation (304) après un événement de perturbation ; et
- remplacer ladite au moins une matrice de précodage intermédiaire P' par ladite nouvelle matrice de précodage P1 ;
- un processeur de précodeur configuré pour :
- adapter lesdits signaux en utilisant ladite matrice de précodage initiale P0 stockée dans ladite mémoire de précodeur ;
- adapter lesdits signaux en utilisant ladite au moins une matrice de précodage intermédiaire P' stockée dans ladite mémoire de précodeur ; et
- adapter lesdits signaux en utilisant ladite nouvelle matrice de précodage P1 stockée dans ladite mémoire de précodeur ;
- une mémoire d'étalonneur de gain configurée pour stocker au moins une matrice d'étalonnage de gain S configurée pour étalonner le gain desdits signaux, sur la base de ladite au moins une matrice de précodage P', conformément auxdites exigences de puissance du signal transmis prédéterminées ; et
- un processeur d'étalonneur de gain configuré pour étalonner le gain desdits signaux en utilisant ladite au moins une matrice d'étalonnage de gain S stockée dans ladite mémoire d'étalonneur de gain.

12. Noeud d'accès (301) **caractérisé en ce qu'il** comprend :
- un contrôleur de vectorisation (330) selon l'une quelconque des revendications 9 et 10 ;
- un processeur de vectorisation (310) selon la revendication 11, ledit processeur de vectorisation (310) étant couplé audit contrôleur de vectorisation (330) et à un groupe de lignes de vectorisation (304) connectant plusieurs émetteurs (303) et plusieurs récepteurs (302) respectifs ; et
- une entité de gestion (340) configurée pour :
- fournir audit contrôleur de vectorisation (330) une diaphonie prévue estimée sur ledit groupe de lignes de vectorisation (304) ;
- détecter un événement de perturbation sur ledit groupe de lignes de vectorisation (304); et
- fournir audit contrôleur de vectorisation (330) une diaphonie prévue estimée à nouveau sur ledit groupe de lignes de vectorisation (304) après la détection dudit événement de perturbation ;

13. Noeud d'accès (301) selon la revendication 12, comprenant un contrôleur de synchronisation configuré pour :
- déterminer un moment synchronisé dans le temps (414) à partir duquel commencer à utiliser ladite nouvelle matrice de précodage P1 afin de précompenser ladite diaphonie prévue estimée à nouveau ;
- transmettre une commande initiée par l'émetteur (411) pour commencer à utiliser ladite nouvelle matrice de précodage P1 audit moment synchronisé dans le temps (414) ;
- dans une période précédant ledit moment synchronisé dans le temps (414), entraîner le remplacement progressif (222) par ledit processeur de vectorisation (310) de ladite matrice de précodage initiale P0 par ladite matrice de précodage intermédiaire P' ; et
- après ledit moment synchronisé dans le temps (414), entraîner l'utilisation de ladite nouvelle matrice de précodage P1 par ledit processeur de vectorisation (310).

14. Système de communication comprenant plusieurs noeuds d'accès (301) selon la revendication 13, chaque noeud d'accès (401) étant connecté à plusieurs CPE (402), équipements des locaux d'abonné, par l'intermédiaire d'un groupe de lignes de vectorisation (304).

15. Produit de programme informatique comprenant des instructions exécutables par un ordinateur pour réaliser un procédé lorsque le programme est exécuté sur un ordinateur, le procédé comprenant les étapes de l'un quelconque des procédés selon l'une quelconque des revendications 1 à 8.
